# EUROPÄISCHE PATENTANMELDUNG

(11) **EP 4 528 399 A1**
(43) Veröffentlichungstag der Anmeldung: **26.03.2025**
(21) Anmeldenummer: 23198480.8
(22) Anmeldetag: 20.09.2023
(51) Int. Cl.: G05B 15/02, F24F 11/30, F24F 11/62, G05B 17/02, F24F 120/10

(54) **VERFAHREN UND ANORDNUNG ZUM STEUERN EINES RAUMKLIMAS**

(71) Anmelder: Siemens Schweiz AG, 8047 Zürich (CH)
(72) Erfinder: Khalil, Mohamed, 81379 München (DE); Ludwig, Christoph Ernst, 81673 München (DE); Sievers, Felix, 80797 München (DE)
(74) Vertreter: Siemens Patent Attorneys

(57) **Zusammenfassung**

Zum Steuern eines Raumklimas eines Raumes (R), wird ein initialer Raumzustand (IRS) in einem Simulator (SIM) zum Simulieren des Raumklimas gespeichert. Weiterhin werden fortlaufend Klimawerte (CM1, CM2) des Raumklimas gemessen und in den Simulator (SIM) eingespeist. Abhängig vom gespeicherten Raumzustand und den gemessenen Klimawerten (CM1, CM2) wird mittels des Simulators (SIM) fortlaufend ein Klimazustand des Raumes (R) und optional auch ein zukünftiger Klimazustand des Raumes simuliert. Des Weiteren werden bei Detektion einer Abweichung zwischen dem simulierten Klimazustand und den gemessenen Klimawerten (CM1, CM2) eine im Raum (R) befindliche Person (P1) detektiert, eine Nachricht (M) zur Abfrage eines aktuellen Raumzustands (RS) an die detektierte Person (P1) übermittelt sowie der im Simulator (SIM) gespeicherte Raumzustand (RS) abhängig von einer Antwort (A) der detektierten Person (P1) aktualisiert. Darüber hinaus wird das Raumklima mittels eines Klimaregelsystems (H) abhängig von einer auf dem aktualisierten Raumzustand (RS) basierenden Simulation gesteuert.

## Beschreibung

Für ein persönliches Wohlbefinden am Arbeitsplatz, in einer Wohnung oder in einem Beförderungsmittel spielt die Einstellung von Heizung, Klimaanlage, Lüftung oder anderer Klimaregelsysteme zur Regelung der Temperatur, Luftfeuchtigkeit oder anderer Parameter eines Raumklimas eine wesentliche Rolle. Dabei wird in der Regel angestrebt, einen Energieaufwand zum Einstellen des Raumklimas zu minimieren, ohne das Wohlbefinden von Raumnutzern wesentlich zu beeinträchtigen.

Zum diesbezüglich optimierten Steuern des Raumklimas greifen moderne Klimaregelsysteme in vielen Fällen auf thermische Modelle der zu klimatisierenden Räume zurück. Anhand der thermischen Modelle können diejenigen Regelmaßnahmen identifiziert werden, die das Raumklima mit möglichst geringem Energieaufwand in einem komfortablen Bereich halten. Zu diesem Zweck ist in modernen Gebäuden häufig eine Vielzahl von Sensoren angebracht, anhand von deren Messdaten ein jeweiliges thermisches Modell fortlaufend aktualisiert wird.

Insbesondere in älteren Bestandsgebäuden fehlen jedoch häufig entsprechende Sensoren, oder die vorhandenen Sensoren erfassen raumklimarelevante Zustandsänderungen eines jeweiligen Raumes, z.B. ein Öffnen eines Fensters, nur unzureichend. Aus diesem Grund ist in Bestandsgebäuden häufig eine Vielzahl von geeigneten Sensoren nachzurüsten, was jedoch oft mit einen erheblichen Installationsaufwand verbunden ist.

Es ist Aufgabe der vorliegenden Erfindung ein Verfahren und eine Anordnung zum Steuern eines Raumklimas anzugeben, das weniger Aufwand erfordert.

Gelöst wird diese Aufgabe durch ein Verfahren mit den Merkmalen des Patentanspruchs 1, durch eine Anordnung mit den Merkmalen des Patentanspruchs 11, durch ein Computerprogrammprodukt mit den Merkmalen des Patentanspruchs 12 sowie durch ein computerlesbares Speichermedium mit den Merkmalen des Patentanspruchs 13.

Zum Steuern eines Raumklimas eines Raumes, wird ein initialer Raumzustand in einem Simulator zum Simulieren des Raumklimas gespeichert. Der Raum kann dabei insbesondere ein Raum eines Gebäudes, eines Bauwerks oder eines Beförderungsmittels sein, wie z.B. ein Großraumbüro, eine Fabrikhalle, ein Wohnraum oder eine Kabine eines Flugzeugs, eines Schiffs oder eines Schienenfahrzeugs. Darüber hinaus kann der Raum auch eine mehrere Einzelräume umfassende Etage oder ein anderer klimatisierbarer Bereich sein. Weiterhin werden fortlaufend Klimawerte des Raumklimas gemessen und in den Simulator eingespeist. Abhängig vom gespeicherten Raumzustand und den gemessenen Klimawerten wird mittels des Simulators fortlaufend ein Klimazustand des Raumes und optional auch ein zukünftiger Klimazustand des Raumes simuliert. Die Klimawerte und/oder der Klimazustand können hierbei insbesondere eine Temperatur, eine CO2-Konzentration, einen Luftstrom, eine Luftfeuchtigkeit, eine Sonneneinstrahlung, eine Abschattung und/oder eine chemische Zusammensetzung der Raumluft betreffen. Des Weiteren werden bei Detektion einer Abweichung zwischen dem simulierten Klimazustand und den gemessenen Klimawerten eine im Raum befindliche Person detektiert, eine Nachricht zur Abfrage eines aktuellen Raumzustands an die detektierte Person übermittelt sowie der im Simulator gespeicherte Raumzustand abhängig von einer Antwort der detektierten Person aktualisiert. Darüber hinaus wird das Raumklima mittels eines Klimaregelsystems abhängig von einer auf dem aktualisierten Raumzustand basierenden Simulation gesteuert.

Zum Ausführen des erfindungsgemäßen Verfahrens sind eine Anordnung zum Steuern eines Raumklimas, ein Computerprogrammprodukt sowie ein computerlesbares, vorzugsweise nichtflüchtiges Speichermedium vorgesehen.

Das erfindungsgemäße Verfahren, die erfindungsgemäße Anordnung sowie das erfindungsgemäße Computerprogrammprodukt können insbesondere mittels eines oder mehrerer Computer, eines oder mehrerer Prozessoren, anwendungsspezifischer integrierter Schaltungen (ASIC), digitaler Signalprozessoren (DSP), einer Cloud-Infrastruktur und/oder sogenannter "Field Programmable Gate Arrays" (FPGA) implementiert oder ausgeführt werden.

Ein Vorteil der Erfindung ist insbesondere darin zu sehen, dass die Steuerung des Raumklimas in vielen Fällen mit bereits vorhandenen oder nur wenigen nachzurüstenden Sensoren auskommt. Durch die Abfrage bei im Raum befindlichen Personen kann ein Mangel an Sensordaten oft hinreichend kompensiert werden, zumal Abweichungen zwischen gemessenen und simulierten Werten häufig durch leicht erkennbare Veränderungen des Raumzustandes, z.B. durch Öffnen eines Fensters bedingt werden. Eine geringere Menge an erfassten Sensordaten steigert zudem in der Regel ein Datenschutzniveau.

Darüber hinaus kann die Simulation anhand der gegebenen Antworten fortlaufend aktualisiert und validiert werden. Dabei können insbesondere auch Ursachen von Änderungen des Raumklimas abgefragt und mit gemessenen Klimawerten verknüpft oder korreliert werden.

Vorteilhafte Ausführungsformen und Weiterbildungen der Erfindung sind in den abhängigen Ansprüchen angegeben.

Nach einer vorteilhaften Ausführungsform der Erfindung kann den gemessenen Klimawerten jeweils eine Messposition zugeordnet sein, und der Klimazustand kann ortsaufgelöst simuliert werden, wobei an den Messpositionen jeweils ein simulierter Klimawert ermittelt werden kann. Entsprechend kann bei der Detektion der Abweichung eine Position der detektierten Abweichung ermittelt werden, und bei der Detektion der Person kann eine Person detektiert werden, die sich näher an der ermittelten Position befindet als eine andere im Raum befindliche Person. Auf diese Weise können insbesondere eine oder mehrere im Raum befindliche Person detektiert werden, die der ermittelten Position am nächsten sind. In der Regel kann davon ausgegangen werden, dass eine in der Nähe der ermittelten Position befindliche Person die Abfrage besonders zuverlässig und/oder mit besonders geringem Aufwand beantworten kann.

Weiterhin kann die im Raum befindliche Person durch Detektion und/oder Lokalisierung eines der Person zugeordneten Endgeräts, insbesondere eines mobilen oder nicht-mobilen Endgeräts detektiert werden. Dementsprechend kann die Nachricht übermittelt werden, indem diese spezifisch an das detektierte Endgerät gerichtet wird.

Alternativ oder zusätzlich kann die im Raum befindliche Person mittels einer Kamera, mittels eines CO2-Sensors, mittels eines WiFi-routers und/oder anhand einer Platzregistrierung detektiert und/oder lokalisiert werden. Die Platzregistrierung kann dabei insbesondere auf einer Platzreservierung, beispielsweise in einem Zugabteil, oder auf einer Zuteilung eines Arbeitsplatzes, z.B. eines Schreibtisches basieren. Mittels eines oder mehrerer WiFi-Router können jeweils empfangene Funkfeldstärken von mobilen Endgeräten von im Raum befindlichen Personen gemessen werden. Diese Funkfeldstärken werden häufig auch als RSSI (Received Signal Strength Indicator) bezeichnet. Anhand der gemessenen Funkfeldstärken kann ein jeweiliges mobiles Endgerät und damit auch die betreffende Person mittels Standardverfahren detektiert und/oder lokalisiert werden.

Gemäß einer weiteren vorteilhaften Ausführungsform der Erfindung können mehrere potenzielle Steueraktionen für das Klimaregelsystem generiert und in den Simulator eingespeist werden. Weiterhin können durch den Simulator für eine jeweilige potenzielle Steueraktion deren Auswirkung auf den Klimazustand simuliert sowie ein Energieaufwand für eine Ausführung der jeweiligen potenziellen Steueraktion ermittelt werden. Abhängig von der jeweils simulierten Auswirkung und dem jeweils ermittelten Energieaufwand kann dann eine der potenziellen Steueraktionen zum Ansteuern des Klimaregelsystems selektiert werden. Vorzugsweise können diejenige oder diejenigen der potenziellen Steueraktionen selektiert werden, deren Ausführung einen minimalen Energieaufwand erfordert und gleichzeitig das Raumklima in einem vorgegebenen komfortablen Bereich hält.

Der Raumzustand kann insbesondere einen Zustand eines Raumelements, z.B. eine Stellung eines Fensters, einer Tür, einer Jalousie oder einer Beschattungsanlage spezifizieren. Darüber hinaus kann der Raumzustand auch einen Zustand des Klimaregelsystems und/oder eine Personenbelegung des Raumes, insbesondere eine Anzahl im Raum befindlicher Personen spezifizieren.

Nach einer weiteren vorteilhaften Ausführungsform der Erfindung kann der Simulator ein thermisches Simulationsmodell des Raumes zum ortsaufgelösten und/oder zeitaufgelösten Simulieren einer Temperaturverteilung im Raum verwenden. Der simulierte Klimazustand des Raums kann insbesondere die simulierte Temperaturverteilung umfassen. Mittels derartiger thermischer Simulationsmodelle können Wärmequellen und Wärmesenken, eine Konvektion, eine Wärmeleitung über eine jeweilige Raumbegrenzung oder über die Luft in vielen Fällen hinreichend genau physikalisch simuliert werden. Zur Durchführung derartiger Simulationen steht eine Vielzahl von zuverlässigen thermischen Simulationsmodellen zur Verfügung, beispielsweise im Rahmen der Simulations-Software AMESim der Firma Siemens AG.

Als Ausgangspunkt für eine Simulation einer Temperaturverteilung eines Raumes oder allgemein von dessen Klimazustand kann insbesondere ein digitales Gebäudemodell genutzt werden, das zu diesem Zweck in den Simulator eingespeist werden kann. Das digitale Gebäudemodell kann dabei insbesondere ein sogenanntes semantisches BIM-Modell (BIM: Building Information Modeling) oder ein anderes CAD-Modell (CAD: Computer-Aided Design) sein.

Vorzugsweise kann das thermische Simulationsmodell einen thermischen Schaltkreis umfassen. Bei einem solchen thermischen Schaltkreis werden Temperaturdifferenzen durch elektrische Spannungen, Wärmeströme durch elektrische Ströme und/oder Wärmewiderstände durch elektrische Widerstände repräsentiert oder darauf abgebildet. Auf diese Weise können bekannte Schaltkreissimulatoren zur zumindest teilweisen Simulation von Wärmephänomenen genutzt werden.

Nach einer weiteren vorteilhaften Ausführungsform der Erfindung kann ein zeitlicher Verlauf der detektierten Abweichung mit vorgegebenen Abweichungsverläufen verglichen werden, denen jeweils eine Angabe über eine Abweichungsursache zugeordnet ist. Abhängig vom Vergleichsergebnis kann dann die Person detektiert und/oder die Angabe über die Abweichungsursache in die Nachricht eingefügt werden. So wird eine plötzlich einsetzende stetige Temperaturverringerung im Raum häufig durch Öffnen eines Fensters verursacht. Sobald ein entsprechender Abweichungsverlauf detektiert wird, kann dann gezielt eine in der Nähe eines Fensters befindliche Person detektiert werden, oder es kann ein Hinweis auf ein möglicherweise geöffnetes Fenster in die Nachricht eingefügt werden.

Nach einer vorteilhaften Weiterbildung der Erfindung kann eine Vielzahl von Antworten detektierter Personen gespeichert werden. Die Antworten können dabei jeweils in Zuordnung zur jeweils detektierten Abweichung gespeichert werden. Mittels der gespeicherten Antworten kann dann ein Maschinenlernmodul darauf trainiert werden, anhand einer detektierten Abweichung eine Abweichungsursache abzuleiten. Die durch die detektierten Abweichungen bedingten Antworten können dabei als klassifizierte Daten im Sinne des überwachten Lernens aufgefasst werden. Auf diese Weise kann durch das Maschinenlernmodul eine Korrelation zwischen einer jeweiligen detektierten Abweichung, insbesondere eines jeweiligen Abweichungsverlaufs und einer jeweiligen Antwort gelernt werden. Zu diesem Zweck steht eine Vielzahl effizienter Verfahren des maschinellen Lernens, insbesondere des überwachten Lernens zur Verfügung. Mit dem trainierten Maschinenlernmodul kann dann eine Antwort bzw. eine Abweichungsursache aus einem detektierten Abweichungsverlauf abgleitet werden. In solchen Fällen kann die Übermittlung der Nachricht unterdrückt werden.

Ein Ausführungsbeispiel der Erfindung wird nachfolgend anhand der Zeichnung näher erläutert. Dabei zeigen jeweils in schematischer Darstellung:
- Figur 1: eine Anordnung zum Steuern eines Raumklimas eines Raumes und
- Figur 2: ein Diagramm zur Veranschaulichung eines Verlaufs einer Abweichung zwischen einem simulierten Klimazustand und gemessenen Klimawerten.

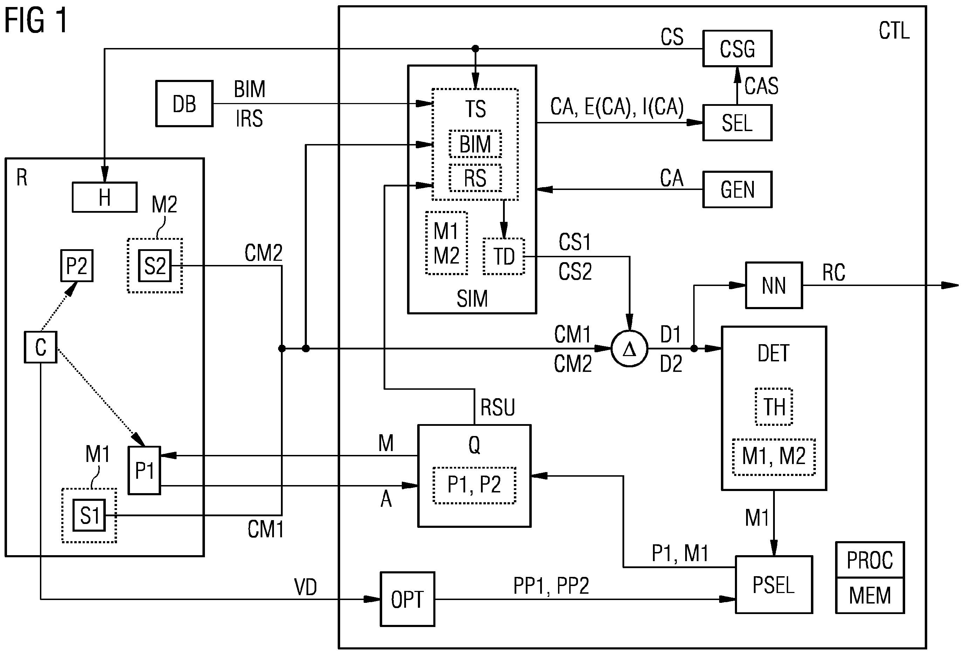

Figur 1 zeigt in schematischer Darstellung eine Anordnung zum Steuern eines Raumklimas eines Raumes R. Die Anordnung umfasst eine computergesteuerte Steuereinrichtung CTL, die über einen oder mehrere Prozessoren PROC zum Ausführen von erfindungsgemäßen Verfahrensschritten sowie über einen oder mehrere Speicher MEM zum Speichern von durch die Steuereinrichtung CTL zu verarbeitenden Daten verfügt.

Der Raum R kann dabei ein Raum eines Gebäudes, eines Bauwerks oder eines Beförderungsmittels sein, wie z.B. ein Großraumbüro, eine Fabrikhalle, ein Wohnraum oder eine Kabine eines Flugzeugs, eines Schiffs oder eines Schienenfahrzeugs. Darüber hinaus kann der Raum R auch eine mehrere Einzelräume umfassende Etage oder ein anderer klimatisierbarer Bereich sein.

Das Raumklima kann insbesondere eine Temperatur, eine Luftfeuchtigkeit, eine Luftbewegung, eine Helligkeit, eine Abschattung und/oder eine Sonneneinstrahlung des Raumes R umfassen oder betreffen. Das Raumklima wird vorzugsweise orts- und/oder zeitabhängig erfasst.

Der Raum R weist ein Klimaregelsystem H zum vorzugsweisen orts- und/oder zeitabhängigen Regeln des Raumklimas auf. Das Klimaregelsystem H kann insbesondere eine Heizungsanlage, eine Klimaanlage, einen Luftbefeuchter, eine Lüftung und/oder eine Beschattungseinrichtung umfassen und/oder ansteuern.

Weiterhin weist der Raum R einen Sensor S1 an einer Messposition M1 sowie einen Sensor S2 an einer Messposition M2 auf. Durch den jeweiligen Sensor S1 bzw. S2 werden fortlaufend Klimawerte CM1 bzw. CM2 des Raumklimas an der betreffenden Messposition M1 bzw. M2 gemessen. Die gemessenen Klimawerte CM1 und CM2 können eine Temperatur, eine CO2-Konzentration, einen Luftstrom, eine Luftfeuchtigkeit, eine Sonneneinstrahlung, eine Abschattung und/oder eine chemische Zusammensetzung der Raumluft an der jeweiligen Messposition M1 bzw. M2 betreffen. Für das vorliegende Ausführungsbeispiel sei angenommen, dass die gemessenen Klimawerte CM1 und CM2 Temperaturwerte an den Messpositionen M1 und M2 sind.

Im vorliegenden Ausführungsbeispiel ist im Raum R ferner eine Videokamera C zu dem Zweck angeordnet, im Raum R befindliche Personen, hier P1 und P2 zu detektieren und zu lokalisieren. Alternativ oder zusätzlich können im Raum R befindliche Personen auch mittels eines CO2-Sensors oder anhand einer Platzregistrierung detektiert und/oder lokalisiert werden.

Die Videokamera C nimmt fortlaufend Bilder des Raumes R auf und übermittelt diese in Form von Videodaten VD zur Steuereinrichtung CTL.

Zur Auswertung der Videodaten VD verfügt die Steuereinrichtung CTL über eine optische Auswerteeinrichtung OPT, der die Videodaten VD fortlaufend zugeführt werden. Die optische Auswerteeinrichtung OPT wertet die zugeführten Videodaten VD fortlaufend mittels einer Bilderkennung aus, um im Raum befindliche Personen zu detektieren und zumindest näherungsweise zu lokalisieren. Im vorliegenden Ausführungsbeispiel detektiert die optische Auswerteeinrichtung OPT die aktuell im Raum R befindlichen Personen P1 und P2 und ermittelt jeweils deren Position PP1 bzw. PP2 im Raum R anhand der Videodaten VD. Durch Durchführung einer solchen Detektion und Lokalisierung von Personen anhand von Videodaten steht eine Vielzahl von effizienten Bilderkennungsbibliotheken zur Verfügung.

Alternativ oder zusätzlich können im Raum R befindliche Personen auch dadurch detektiert werden, dass deren mobile oder nichtmobile Endgeräte detektiert und lokalisiert werden.

Weiterhin umfasst die Steuereinrichtung CTL einen Simulator SIM zum orts- und zeitaufgelösten Simulieren eines Klimazustands des Raumes R. Der Klimazustand wird dabei durch orts- und zeitaufgelöste Klimawerte dargestellt. Für das vorliegende Ausführungsbeispiel sei angenommen, dass der simulierte Klimazustand eine im Zeitverlauf simulierte Temperaturverteilung TD ist oder eine solche umfasst. Die Temperaturverteilung TD kann dabei durch ein zeitlich veränderliches ortsaufgelöstes Temperaturfeld dargestellt werden.

Zum fortlaufenden Simulieren der Temperaturverteilung TD verfügt der Simulator SIM über ein thermisches Simulationsmodell TS des Raumes R. Letzteres kann insbesondere einen sogenannten thermischen Schaltkreis umfassen.

Das thermische Simulationsmodell TS wird mittels eines digitalen Gebäudemodells BIM sowie eines initialen Raumzustandes IRS initialisiert, die aus einer Datenbank DB eingelesen und im thermischen Simulationsmodell TS hinterlegt werden. Der initiale Raumzustand IRS initialisiert dabei einen vom thermischen Simulationsmodell TS verwendeten und im weiteren Verfahren zu aktualisierenden Raumzustand RS.

Das digitale Gebäudemodell BIM ist vorzugsweise ein semantisches BIM-Modell (BIM: Building Information Modeling) oder ein anderes CAD-Modell, durch das der Raum R baulich spezifiziert wird. Das Gebäudemodell BIM beschreibt eine Geometrie des Raumes R sowie eine Vielzahl von dessen Raumelementen, wie z.B. Wände, Decken, Böden, Fenster oder Türen in maschinenlesbarer Form mittels einer Vielzahl von Gebäudeelementangaben.

Demgegenüber spezifiziert ein jeweiliger Raumzustand einen grundsätzlich veränderlichen Zustand von Raumelementen und/oder des Klimaregelsystems H und/oder eine Personenbelegung des Raumes R. Im Zusammenhang mit der vorliegenden Erfindung werden durch einen jeweiligen Raumzustand insbesondere diejenigen veränderlichen Einflussfaktoren spezifiziert, die das Raumklima maßgeblich beeinflussen. Beispielsweise eine Stellung eines Fensters, einer Tür, einer Jalousie oder einer Beschattungsanlage sowie - wie oben schon erwähnt - eine Aktivität des Klimaregelsystems H oder eine Personenbelegung.

Als initialer Raumzustand IRS kann dann beispielsweise ein Raumzustand vorgegeben werden, bei dem alle Fenster und Türen geschlossen sind.

Zur fortlaufenden Simulation des Klimazustandes bzw. der Temperaturverteilung TD werden in das thermische Simulationsmodell TS weiterhin die gemessenen Temperaturwerte CM1 und CM2 in Zuordnung zu ihrer jeweiligen Messposition M1 bzw. M2 sowie aktuelle Steuersignale CS für das Klimaregelsystem H fortlaufend eingespeist. Anhand des digitalen Gebäudemodells BIM, des initialisierten Raumzustandes RS, der aktuell gemessenen Temperaturwerte CM1 und CM2 sowie der Steuersignale CS simuliert der Simulator SIM mittels des thermischen Simulationsmodells TS die Temperaturverteilung TD im Zeitverlauf und vorzugsweise auch für zukünftige Zeitpunkte. Zur Durchführung einer solchen thermischen Simulation kann beispielsweise die Simulations-Software AMESim der Firma Siemens AG verwendet werden.

Aus der simulierten Temperaturverteilung TD werden durch den Simulator SIM insbesondere ein simulierter Temperaturwert CS1 an der Messposition M1 und ein simulierter Temperaturwert CS2 an der Messposition M2 fortlaufend abgeleitet.

Die simulierten Temperaturwerte CS1 und CS2 werden durch die Steuereinrichtung CTL fortlaufend mit den gemessenen Temperaturwerten CM1 und CM2 verglichen. Dabei werden ein Abstand D1 zwischen dem simulierten Temperaturwert CS1 und dem gemessenen Temperaturwert CM1 sowie ein Abstand D2 zwischen dem simulierten Temperaturwert CS2 und dem gemessenen Temperaturwert CM2 im Zeitverlauf ermittelt. Die Abstände D1 und D2 können beispielsweise als Betrag oder als Quadrat einer jeweiligen Differenz zwischen einem gemessenen und einem simulierten Temperaturwert ermittelt werden.

Die Abstände D1 und D2 werden fortlaufend in einen Abweichungsdetektor DET der Steuereinrichtung CTL eingespeist und dort jeweils der zugehörigen Messposition M1 bzw. M2 zugeordnet, d.h. D1 der Messposition M1 und D2 der Messposition M2. Die Abstände D1 und D2 werden durch den Abweichungsdetektor jeweils mit einem ggf. messpositionsabhängigen Schwellwert TH verglichen. Bei Überschreitung des Schwellwerts TH durch einen jeweiligen Abstand D1 bzw. D2 wird jeweils eine Abweichung detektiert. Dabei wird eine Abweichung an der Messposition M1 detektiert, falls der Abstand D1 den Schwellwert TH überschreitet und eine Abweichung an der Messposition M2, falls der Abstand D2 den Schwellwert TH überschreitet. Auf diese Weise können durch den Abweichungsdetektor DET Abweichungen zwischen Simulationswerten und Messwerten ortsabhängig und im Zeitverlauf detektiert werden.

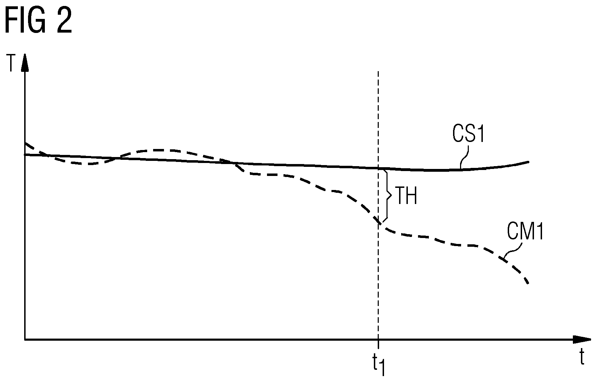

Figur 2 veranschaulicht einen zeitlichen Verlauf einer solchen Abweichung in einem Diagramm mit einer Temperaturachse T als Ordinate und einer Zeitachse t als Abszisse. Im Diagramm sind ein zeitlicher Verlauf des gemessenen Temperaturwerts CM1 sowie ein zeitlicher Verlauf des simulierten Temperaturwerts CS1 gemeinsam aufgetragen. Der Abstand der beiden Kurven entspricht offenbar dem oben erwähnten Abstand D1. Es zeigt sich, dass die anfänglich zumindest näherungsweise übereinstimmenden Temperaturverläufe CM1 und CS1 in der rechten Hälfte des Diagramms zunehmend voneinander abweichen. Der Abfall der gemessenen Temperaturwerte CM1 gegenüber den simulierten Temperaturwerten CS1 kann dabei z.B. durch Öffnen eines Fensters bedingt sein, wenn das thermische Simulationsmodell TS über das Öffnen nicht informiert wird.

Für das vorliegende Ausführungsbeispiel sei angenommen, dass der Abstand D1 zum Zeitpunkt t₁ den Schwellwert TH überschreitet. Infolgedessen wird durch den Abweichungsdetektor DET zu diesem Zeitpunkt t₁ eine Abweichung zwischen dem gemessenen Temperaturwert CM1 und dem simulierten Temperaturwert CS1 an der zugehörigen Messposition M1 detektiert.

Nach der Detektion einer Abweichung kann durch den Abweichungsdetektor DET vorzugsweise ein zeitlicher Verlauf der Abweichung mit vorgegebenen Abweichungsverläufen verglichen werden, denen jeweils eine Angabe RC über eine Abweichungsursache zugeordnet ist. So kann einem anhaltenden Abfall einer gemessenen Temperatur gegenüber einer simulierten Temperatur beispielsweise eine Öffnung eines Fensters als Abweichungsursache zugeordnet werden.

Alternativ oder zusätzlich kann ein Maschinenlernmodul NN vorab darauf trainiert werden, anhand eines detektierten Abweichungsverlaufs eine Abweichungsursache abzuleiten und eine entsprechende Angabe RC über diese Abweichungsursache auszugeben.

Wie Figur 1 weiter veranschaulicht, übermittelt der Abweichungsdetektor DET infolge der Detektion der Abweichung an der Messposition M1 letztere an ein Personenselektionsmodul PSEL der Steuereinrichtung CTL. Das Personenselektionsmodul PSEL dient dem Zweck, anhand einer übermittelten Messposition, hier M1, eine im Raum R befindliche Person zu selektieren, die der Position M1 der detektierten Abweichung am nächsten ist. Hierzu werden dem Personenselektionsmodul PSEL fortlaufend die aktuellen Positionen, hier PP1 und PP2, der im Raum R lokalisierten Personen, hier P1 und P2, von der optischen Auswerteeinrichtung OPT zugeführt. Das Personenselektionsmodul PSEL ermittelt damit einen jeweiligen Abstand der Positionen PP1 und PP2 zur Messposition M1 der detektierten Abweichung. Abhängig davon selektiert das Personenselektionsmodul PSEL diejenige Person, hier P1, deren Position den geringsten Abstand zur Messposition M1 aufweist.

Infolgedessen übermittelt das Personenselektionsmodul PSEL eine die selektierte Person P1 identifizierende, kennzeichnende oder ihr anderweitig zugeordnete Angabe zusammen mit der Messposition M1 zu einer Abfrageeinrichtung Q der Steuereinrichtung CTL. Diese Angabe ist in Figur 1 aus Gründen der Übersichtlichkeit ebenfalls mit dem Bezugszeichen P1 bezeichnet. Die Angabe kann beispielsweise einen Arbeitsplatz, einen Arbeitsplatzrechner oder ein mobiles Endgerät der selektierten Person P1 oder die selektierte Person selbst identifizieren. Vorzugsweise umfasst die Angabe eine Adressinformation, anhand der eine Nachricht gezielt an die selektierte Person P1, z.B. an ein mobiles oder nichtmobiles Endgerät dieser Person übermittelt werden kann.

Durch die übermittelte Angabe wird die Abfrageeinrichtung Q dazu veranlasst, eine Abfragenachricht M zu generieren und anhand dieser Angabe gezielt an die selektierte Person P1 zu übermitteln. Die Abfragenachricht M dient dem Zweck, die selektierte Person P1 dazu aufzufordern, einen aktuellen Raumzustand zu ermitteln und in einer Antwortnachricht A an die Abfrageeinrichtung Q zu übermitteln.

Zu diesem Zweck werden durch die Abfrageeinrichtung Q zunächst ein oder mehrere in der Nähe der Messposition M1 befindliche Raumelemente z.B. anhand des digitalen Gebäudemodels BIM identifiziert. Dabei kann insbesondere auch die Angabe RC über die wahrscheinliche Abweichungsursache berücksichtigt werden. Für dieses mindestens eine Raumelement wird daraufhin ein Abfragetext generiert, der dazu auffordert, einen Zustand dieses mindestens einen Raumelements zu ermitteln und in ein Eingabefeld einzugeben. Optional kann auch dazu aufgefordert werden, eine aktuelle Personenbelegung des Raumes R oder einen aktuellen Zustand des Klimaregelsystems H einzugeben. So kann beispielsweise abgefragt werden, ob ein jeweiliges Fenster oder eine jeweilige Tür aktuell offen oder geschlossen ist oder wie eine Heizung aktuell eingestellt ist.

Der generierte Abfragetext wird durch die Abfrageeinrichtung Q in die Abfragenachricht M eingefügt, die daraufhin gezielt an die selektierte Person P1, z.B. an ein mobiles oder nichtmobiles Endgerät dieser Person P1 übermittelt wird.

Eine von der selektierten Person P1 eingegebene Antwort auf die empfangene Abfragenachricht M wird dann innerhalb einer Antwortnachricht A zur Abfrageeinrichtung Q übermittelt. Die Abfrageeinrichtung Q extrahiert daraufhin aus der Antwortnachricht A einen darin angegebenen Zustand des mindestens einen Raumelements und gegebenenfalls andere Angaben über den abgefragten Raumzustand.

Die extrahierten Angaben und insbesondere der angegebene Zustand des mindestens einen Raumelements werden durch die Abfrageeinrichtung Q in Form von Aktualisierungsdaten RSU zum Simulator SIM übermittelt. Infolgedessen wird der im thermischen Simulationsmodell TS hinterlegte Raumzustand RS gemäß den Aktualisierungsdaten RSU aktualisiert. D.h. der Raumzustand RS wird an die extrahierten Angaben und insbesondere an den angegebenen Zustand des mindestens einen Raumelements angepasst. So kann beispielsweise ein im Raumzustand RS spezifizierter Status eines Fensters vom Zustand "geschlossen" gemäß den Aktualisierungsdaten RSU auf den Zustand "offen" gesetzt werden.

Die Simulation des Raumklimas kann dann basierend auf dem aktualisierten Raumzustand RS fortgesetzt werden.

Durch die bedarfsweise Abfrage von aktuellen Raumzuständen bei im Raum befindlichen Personen kann das thermische Simulationsmodell TS mit geringem Aufwand aktuell gehalten werden. Auf diese Weise kann eine Simulationsgenauigkeit des Simulators SIM oft erheblich verbessert werden, ohne zusätzliche Sensoren im Raum R nachrüsten zu müssen.

Abhängig von der fortlaufenden Simulation des Raumklimas wird das Klimaregelsystem H durch die Steuereinrichtung CTL in optimierter Weise gesteuert, beispielsweise durch aktive Steuerung einer Heizung, einer Klimaanlage, einer Lüftung, einer Jalousie und/oder einer Beschattungsanlage.

Zur Optimierung der Steuerung verfügt die Steuereinrichtung CTL über einen Generator GEN zum Generieren einer Vielzahl von potenziellen Steueraktionen CA für das Klimaregelsystem H. Aus der Vielzahl der potenziellen Steueraktionen CA sollen im weiteren Verfahren diejenigen Steueraktionen selektiert werden, durch die das Klimaregelsystem H in optimierter Weise gesteuert wird.

Die potenziellen Steueraktionen CA werden vom Generator GEN in den Simulator SIM eingespeist. Infolgedessen simuliert der Simulator SIM für jede der potenziellen Steueraktionen CA, wie sich eine Ansteuerung des Klimaregelsystems H gemäß der betreffenden potenziellen Steueraktion CA auf den Klimazustand des Raumes auswirken würde und welchen Energieaufwand E diese Ansteuerung zur Folge haben würde.

Die potenziellen Steueraktionen CA werden jeweils zusammen mit dem jeweils prognostizierten Energieaufwand E sowie einer Information I über die jeweils prognostizierte Auswirkung vom Simulator SIM zu einem Selektionsmodul SEL übermittelt. Die Information I kann hierbei insbesondere eine prognostizierte Temperaturverteilung oder eine andere prognostizierte Auswirkung auf das Raumklima betreffen.

Das Selektionsmodul selektiert dann abhängig vom jeweils ermittelten Energieaufwand E und der jeweiligen Information I aus den potenziellen Steueraktionen CA eine Steueraktion CAS, deren Ausführung das Raumklima in einem vorgegebenen komfortablen Bereich hält und gleichzeitig einen minimalen Energieaufwand E erfordert.

Die selektierte Steueraktion CAS wird schließlich vom Selektionsmodul SEL zu einem Steuersignalgenerator CSG der Steuereinrichtung CTL übermittelt. Der Steuersignalgenerator CSG erzeugt dann zu der selektierten Steueraktion CAS ein Steuersignal CS, durch das das Klimaregelsystem H veranlasst wird, die selektierte Steueraktion CAS auszuführen.

## Patentansprüche

1. Verfahren zum Steuern eines Raumklimas eines Raumes (R), wobei
a) ein initialer Raumzustand (IRS) in einem Simulator (SIM) zum Simulieren des Raumklimas gespeichert wird,
b) fortlaufend Klimawerte (CM1, CM2) des Raumklimas gemessen und in den Simulator (SIM) eingespeist werden,
c) mittels des Simulators (SIM) abhängig vom gespeicherten Raumzustand und den gemessenen Klimawerten (CM1, CM2) fortlaufend ein Klimazustand des Raumes (R) simuliert wird,
d) bei Detektion einer Abweichung zwischen dem simulierten Klimazustand und den gemessenen Klimawerten (CM1, CM2)
- eine im Raum (R) befindliche Person (P1) detektiert wird,
- eine Nachricht (M) zur Abfrage eines aktuellen Raumzustands (RS) an die detektierte Person (P1) übermittelt wird, und
- der im Simulator (SIM) gespeicherte Raumzustand (RS) abhängig von einer Antwort (A) der detektierten Person (P1) aktualisiert wird, und
e) das Raumklima mittels eines Klimaregelsystems (H) abhängig von einer auf dem aktualisierten Raumzustand (RS) basierenden Simulation gesteuert wird.

2. Verfahren nach Anspruch 1, **dadurch gekennzeichnet,**
**dass** den gemessenen Klimawerten (CM1, CM2) jeweils eine Messposition (M1, M2) zugeordnet ist,
**dass** der Klimazustand ortsaufgelöst simuliert wird, wobei an den Messpositionen (M1, M2) jeweils ein simulierter Klimawert (CS1, CS2) ermittelt wird, und
**dass** bei der Detektion der Abweichung
- eine Position (M1) der detektierten Abweichung ermittelt wird, und
- bei der Detektion der Person eine Person (P1) detektiert wird, die sich näher an der ermittelten Position (M1) befindet als eine andere im Raum befindliche Person (P2).

3. Verfahren nach einem der vorhergehenden Ansprüche, **dadurch gekennzeichnet,**
**dass** die im Raum (R) befindliche Person (P1) durch Detektion und/oder Lokalisierung eines der Person zugeordneten Endgeräts detektiert wird, und
**dass** die Nachricht (M) übermittelt wird, indem die Nachricht (M) spezifisch an das detektierte Endgerät gerichtet wird.

4. Verfahren nach einem der vorhergehenden Ansprüche, **dadurch gekennzeichnet,**
**dass** die im Raum (R) befindliche Person (P1) mittels einer Kamera (C), mittels eines CO2-Sensors, mittels eines WiFi-Routers und/oder anhand einer Platzregistrierung detektiert und/oder lokalisiert wird.

5. Verfahren nach einem der vorhergehenden Ansprüche, **dadurch gekennzeichnet,**
**dass** mehrere potenzielle Steueraktionen (CA) für das Klimaregelsystem (H) generiert und in den Simulator (SIM) eingespeist werden,
**dass** durch den Simulator (SIM) für eine jeweilige potenzielle Steueraktion (CA)
- eine Auswirkung der jeweiligen potenziellen Steueraktion (CA) auf den Klimazustand simuliert wird, und
- ein Energieaufwand (E) für eine Ausführung der jeweiligen potenziellen Steueraktion (CA) ermittelt wird, und
**dass** abhängig von der jeweils simulierten Auswirkung und dem jeweils ermittelten Energieaufwand (E) eine der potenziellen Steueraktionen (CAS) zum Ansteuern des Klimaregelsystems (H) selektiert wird.

6. Verfahren nach einem der vorhergehenden Ansprüche, **dadurch gekennzeichnet,**
**dass** der Raumzustand einen Zustand eines Raumelements, einen Zustand des Klimaregelsystems und/oder eine Personenbelegung des Raumes (R) spezifiziert.

7. Verfahren nach einem der vorhergehenden Ansprüche, **dadurch gekennzeichnet,**
**dass** der Simulator (SIM) ein thermisches Simulationsmodell (TS) des Raumes (R) zum ortsaufgelösten und/oder zeitaufgelösten Simulieren einer Temperaturverteilung (TD) im Raum (R) verwendet.

8. Verfahren nach Anspruch 7, **dadurch gekennzeichnet,**
**dass** das thermische Simulationsmodell (TS) einen thermischen Schaltkreis umfasst.

9. Verfahren nach einem der vorhergehenden Ansprüche, **dadurch gekennzeichnet,**
**dass** ein zeitlicher Verlauf der detektierten Abweichung mit vorgegebenen Abweichungsverläufen verglichen wird, denen jeweils eine Angabe (RC) über eine Abweichungsursache zugeordnet ist, und
**dass** abhängig vom Vergleichsergebnis die Person (P1) detektiert wird und/oder die Angabe (RC) über die Abweichungsursache in die Nachricht (M) eingefügt wird.

10. Verfahren nach einem der vorhergehenden Ansprüche, **dadurch gekennzeichnet,**
**dass** eine Vielzahl von Antworten detektierter Personen gespeichert wird, und
**dass** mittels der gespeicherten Antworten ein Maschinenlernmodul (NN) darauf trainiert wird, anhand einer detektierten Abweichung eine Abweichungsursache abzuleiten.

11. Anordnung zum Steuern eines Raumklimas eines Raumes (R), mit Mitteln zum Ausführen der Schritte eines Verfahrens nach einem der vorhergehenden Ansprüche.

12. Computerprogrammprodukt, umfassend Befehle, die bei der Ausführung des Programms durch einen Computer eine Anordnung nach Anspruch 11 dazu veranlassen, ein Verfahren nach einem der Ansprüche 1 bis 10 auszuführen.

13. Computerlesbares Speichermedium mit einem gespeicherten Computerprogrammprodukt nach Anspruch 12.
